# EUROPEAN PATENT SPECIFICATION

(11) **EP 4 177 592 B1**
(45) Date of publication and mention of the grant of the patent: **14.10.2026**
(21) Application number: 21836992.4
(22) Date of filing: 14.06.2021
(51) Int. Cl.: G01N 15/06, G08B 17/00, G08B 25/00, G08B 25/08, G08B 31/00, G01N 15/00

(54) **SIGN DETERMINATION SYSTEM, INTEGRATED SYSTEM, SIGN DETERMINATION METHOD, AND PROGRAM**
ZEICHENBESTIMMUNGSSYSTEM, INTEGRIERTES SYSTEM, ZEICHENBESTIMMUNGSVERFAHREN UND PROGRAMM
SYSTÈME DE DÉTERMINATION DE SIGNE, SYSTÈME INTÉGRÉ, PROCÉDÉ DE DÉTERMINATION DE SIGNE ET PROGRAMME

(30) Priority: 06.07.2020 JP 2020116696
(43) Date of publication of application: 10.05.2023
(73) Proprietor: Panasonic Intellectual Property Management Co., Ltd., Osaka-shi, Osaka 540-6207 (JP)
(72) Inventor: TAKAHASHI, Hideaki, Osaka-shi, Osaka 540-6207 (JP); CHINZAKA, Mai, Osaka-shi, Osaka 540-6207 (JP)
(74) Representative: Appelt, Christian W.
(86) International application number: PCT/JP2021/022471
(87) International publication number: WO 2022/009614

(56) References cited:
- CN-A- 107 331 102
- CN-A- 108 648 403
- CN-A- 111 223 263
- CN-A- 111 371 895
- JP-A- 2014 126 878
- JP-A- 2018 088 105
- JP-A- 2018 180 676
- KR-B1- 101 893 563

## Description

### Technical Field

The present disclosure relates to sign determination systems, integrated systems, sign determination methods, and programs. Specifically, the present disclosure relates to a sign determination system, an integrated system, a sign determination method, and a program for determining a sign of a fire.

### Background Art

JP 2013-186554 A discloses a rescue activity support system. The rescue activity support system includes: a fire sensing device that senses the presence of a fire in a facility which is a monitoring target; and a plurality of camera devices installed in the facility. The rescue activity support system further includes a decision means and a notification means. When the fire sensing device senses the presence of the fire, the decision means decides, based on a video signal representing a video acquired by each of the camera devices, whether or not a person is present in an area in which the video has been captured by each of the camera devices. The notification means notifies a predetermined notification destination of information indicating a decision result by the decision means and camera position information indicating a location of each of the camera devices.

The rescue activity support system of JP 2013-186554 A notifies the notification destination of the presence of the fire when the fire sensing device senses the presence of the fire, but there are demands for detecting the fire at an earlier stage.

CN 111223263 A discloses a fire early warning response system, which comprises a sensor subsystem, a camera device, a data concentrator and a central data comprehensive analysis platform, and terminal equipment, wherein the sensor subsystem is arranged in a disaster monitoring area and is used for acquiring environmental data in the area; the camera device is used for collecting video stream data in the monitoring area; the data concentrator is used for collecting the environment data and the video stream data and uploading the environment data and the video stream data to the central data comprehensive analysis platform; the central data comprehensive analysis platform is used for storing data and carrying out data processing and resource scheduling; and the terminal equipment is used for receiving messages sent by the central data comprehensive analysis platform and carrying out corresponding response.
KR 101893563 B1 discloses a fire black box system based on IoT and an operation method thereof which can receive sensor data and environmental data of a device and a space as monitoring data to predict a fie risk based on the monitoring data.

### Summary of Invention

It is an object of the present disclosure to provide a sign determination system, an integrated system, a sign determination method, and a program which are configured to detect a fire at an early stage.

A system including a sign determination system and a plurality of sensing devices, a sign determination method and a program are defined in independent claims 1,6 and 7, respectively. Preferred embodiments are defined in claims 2 to 5.

### Brief Description of Drawings

FIG. 1 is a schematic system configuration diagram of a sign determination system and an integrated system according to an embodiment of the present disclosure;
FIG. 2 is a schematic plan view of a facility to which the sign determination system and the integrated system are applied;
FIG. 3 is a graph of pieces of detection data of sensing devices included in the integrated system and a cumulative value of the pieces of detection data;
FIG. 4 is a flow chart for explaining operation of the sign determination system;
FIG. 5 is a schematic system configuration diagram of a sign determination system and an integrated system according to a first variation; and
FIG. 6 is a schematic system configuration diagram of a sign determination system and an integrated system according to a second variation.

### Description of embodiments

### (Embodiment)

### (1) Overview

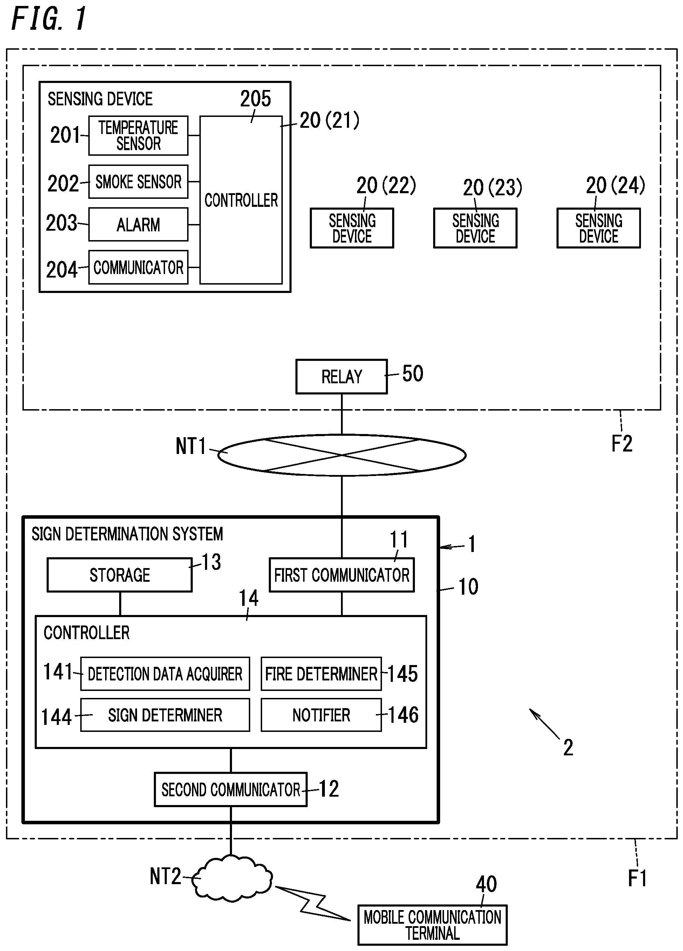

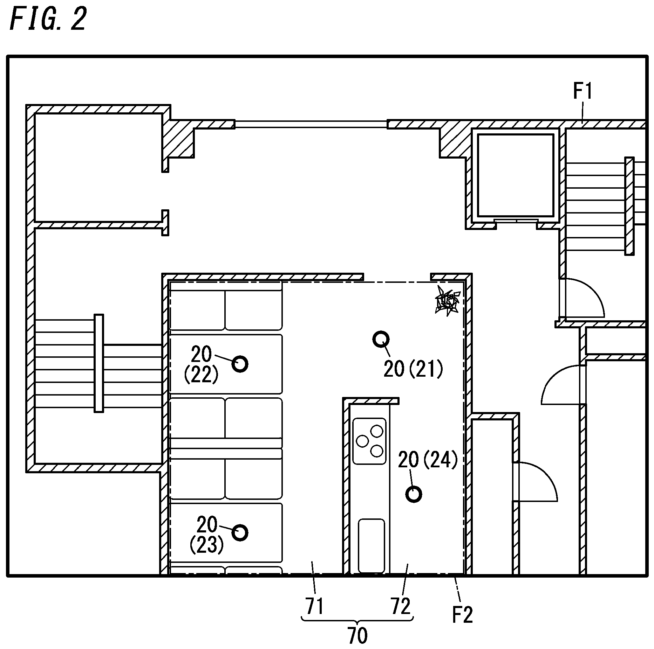

As shown in FIG. 1, a sign determination system 1 according to the present embodiment includes a detection data acquirer 141 and a sign determiner 144. A plurality of sensing devices 20 each sense the presence or absence of a fire in a target space F2 (see FIG. 2) in accordance with a piece of detection data of a sensor configured to detect a fire-related event related to at least one of a temperature or a smoke density in the target space F2 (see FIG. 2). The detection data acquirer 141 acquires the pieces of detection data from the plurality of sensing devices 20. The sign determiner 144 determines the presence or absence of a sign of the fire in the target space F2 in accordance with a cumulative value obtained by accumulating the pieces of detection data acquired from the plurality of sensing devices 20.

In this embodiment, the target space F2 (see FIG. 2) is a space which is in a facility F1 and in which the presence or absence of a fire is to be determined. The facility F1 is, for example, a non-residential or residential building. In the following embodiment, a case will be described in which the facility F1 is, for example, a commercial complex with a plurality of retail establishments (eating and drinking establishments, merchandise stores, and the like), and the target space F2 is a space of each retail establishment in the facility F1. Note that the target space F2 is not limited to the space of each retail establishment but may be a shared space in the facility F1 or an entire space in the facility F1. A sign of a fire includes a precursory event that possibly develops into a fire. Examples of such a precursory event include a situation in which an object in the target space F2 has a temperature increased to such an extent that the temperature does not exceed the flash point or the ignition point, a situation in which smoke is thinly generated due to smoldering of a combustible in the target space F2, and a situation in which a fluid or gaseous fuel leaks out in the target space F2.

The sign determiner 144 determines a sign of a fire in accordance with a time integral value obtained by time integration of a cumulative value obtained by accumulating the pieces of detection data on a fire-related event (i.e., measured values) detected by sensors included in the respective sensing devices 20. In this case, the fire-related event is an event that occurs along with a fire and an indication of the fire, and the fire-related event is, for example, an event related to at least one of a temperature or a smoke density. Specifically, the fire-related event includes at least one of a change in the temperature or a change in the smoke density. The fire-related event may include an increase in carbon monoxide, carbon dioxide, and the like produced due to the incomplete combustion of a gas in the case of a fire or may include an event (e.g., leakage of a liquid fuel, or a gaseous fuel and occurrence of a short-circuit accident) causing a fire. In the present embodiment, as an example, the plurality of sensing devices 20 sense the presence or absence of a fire in accordance with the pieces of detection data on the temperature and the smoke density and perform an alarming operation related to the fire.

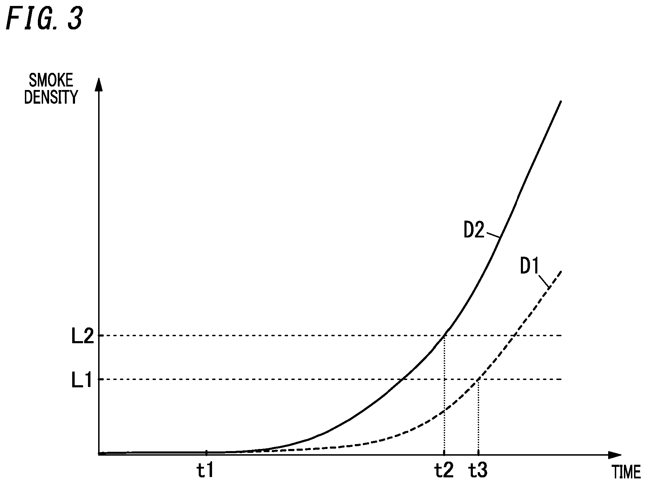

FIG. 3 is an example of a graph showing a time change of detection data (e.g., detection data on the smoke density) D1 detected by one of the plurality of sensing devices 20 and a cumulative value D2 obtained by accumulating the pieces of detection data D1 (i.e., measured values) of the plurality of sensing devices 20 at the time of the presence of a fire. As the fire spreads from a timing at which a sign of a fire occurs, the value of the detection data D1 gradually increases, and here, the cumulative value D2 is obtained by accumulating the pieces of detection data D1 of the plurality of sensing devices 20, and therefore, an increment in the cumulative value D2 along with the spread of the fire is greater than an increment in the detection data D1 of each individual sensing device 20. The sign determiner 144 refers to the cumulative value D2 obtained by accumulating the pieces of detection data D1, and thereby, the sign determiner 144 easily notices a slight change, caused due to a sign of a fire, in the pieces of detection data D1 and thus easily determines the sign of the fire, which enables the fire to be detected at an early stage.

### (2)Details

The sign determination system 1 according to the present embodiment will be described in detail below with reference to the drawings. Note that figures described in the following embodiment are schematic views. The ratio of sizes and the ratio of thicknesses of components in the figures do not necessarily reflect actual dimensional ratios.

### (2.1) Configuration

The sign determination system 1 of the present embodiment is used to detect a sign of a fire in the target space F2 in the facility F1 such as a commercial complex with a plurality of retail establishments. FIG. 2 is a plan view of an example of the target space F2. In the example shown in FIG. 2, a space of one retail establishment 70 in the facility F1 is the target space F2. The retail establishment 70 is, for example, an eating and drinking establishment and includes a seat area 71 in which there are seats for customers and a kitchen area 72 serving as a kitchen.

In addition, the facility F1 is provided with the plurality of sensing devices 20 for sensing the presence or absence of a fire in the target space F2. In this embodiment, an integrated system 2 including the sign determination system 1 and the plurality of sensing devices 20 is applied to the facility F1. The sensing devices 20 and the sign determination system 1 included in the integrated system 2 will be described below.

### (2.1.1) Sensing Device

In the retail establishment 70 which is the target space F2, the plurality of sensing devices 20 are installed, for example, on ceilings of the seat area 71 and the kitchen area 72. That is, the plurality of sensing devices 20 are arranged in the same space. Here, saying that the plurality of sensing devices 20 are arranged in the same space means that spaces in which the respective sensing devices 20 are arranged are communicated with each other and means that the plurality of sensing devices 20 are arranged in one space which may be affected by a sign of a fire. Therefore, the plurality of sensing devices 20 arranged in the same space can detect smoke or a temperature rise which occurs as a sign of a fire. To the plurality of sensing devices 20, respective individual identifications ID are assigned. In the present embodiment, four sensing devices 20 are arranged in the target space F2. When the four sensing devices 20 are distinguished from one another in the following description, the four sensing devices 20 are referred to as sensing devices 21, 22, 23, and 24.

Each of the plurality of sensing devices 20 includes a temperature sensor 201, a smoke sensor 202, an alarm 203, a communicator 204, and a controller 205.

The temperature sensor 201 includes a thermosensor such as a thermistor and outputs detection data according to an ambient temperature.

The smoke sensor 202 includes, for example, a photoelectric smoke detector and outputs detection data according to an ambient smoke density.

The alarm 203 gives an alarm by at least one of light or a sound.

The communicator 204 is configured to perform mutual communication with the sign determination system 1. In the present disclosure, "configured to communicate" means that a component can transmit and receive information directly or indirectly via a relay 50 or over an internal network NT1 by an appropriate communication method of wired communication or wireless communication. The internal network NT1 is a network such as a Local Area Network (LAN) provided in the facility F1. In the present embodiment, the communicator 204 communicates with the relay 50 by the wireless communication method and communicates with the sign determination system 1 via the relay 50 and over the internal network NT1. Further, in the present embodiment, the communicator 204 adopts wireless communication using a radio wave as a communication medium in compliance with the standard of Wi-Fi (registered trademark), Bluetooth (registered trademark), ZigBee (registered trademark), a license-free low-power radio (specified low-power radio), or the like.

The controller 205 may be embodied by, for example, a computer system including one or more processors (microprocessors) and one or more memory elements. That is, the one or more processors execute one or more programs stored in the one or more memory elements, thereby implementing functions as the controller 205. In this embodiment, the one or more programs are stored in the one or more memory elements of the controller 205 in advance. However, the program(s) may be provided over a telecommunications network such as the Internet or as a non-transitory recording medium such as a memory card storing the program(s).

The controller 205 regularly acquires pieces of detection data from the temperature sensor 201 and the smoke sensor 202, and based on the pieces of detection data of the temperature sensor 201 and the smoke sensor 202, the controller 205 detects the presence or absence of a fire in the target space F2 in which the sensing device 20 is arranged. Specifically, the controller 205 compares, based on the detection data received from the smoke sensor 202, the smoke density detected by the smoke sensor 202 with a predetermined density threshold in terms of their magnitudes. If the smoke density is less than the density threshold, the controller 205 determines that a fire is absent, and if the smoke density is greater than or equal to the density threshold, the controller 205 determines that a fire is present. Further, the controller 205 performs a process of correcting the density threshold in accordance with the detection data received from the temperature sensor 201. The controller 205 corrects, based on the detection data on the temperature, the density threshold such that the density threshold of the smoke decreases as the temperature increases, that is, a sensibility increases as the temperature increases. Note that a determination technique by which the controller 205 determines the presence or absence of a fire is not limited to the technique described above but may accordingly be changed.

When determining that a fire is present, the controller 205 controls the alarm 203 such that the alarm 203 performs the alarming operation. As a result, the sensing device 20 can give an alarm about the presence of the fire to a person around the sensing device 20.

In addition, when the communicator 204 receives, from the sign determination system 1, a transmission request requesting transmission of the pieces of detection data of the temperature sensor 201 and the smoke sensor 202, the controller 205 acquires the pieces of detection data from the temperature sensor 201 and the smoke sensor 202. Then, the controller 205 causes the communicator 204 to transmit the pieces of detection data of the temperature sensor 201 and the smoke sensor 202 and the identification ID of the sensing device 20 via the relay 50 and over the internal network NT1 to the sign determination system 1.

Incidentally, in the present embodiment, the plurality of sensing devices 20 are so-called interconnect-type disaster protection devices and are each configured to emit an alarm sound in interconnection with the other sensing device(s) (together with the other sensing device(s)) no matter which of the sensing devices detects a fire. The sensing device (an interconnection origin) located at a fire source emits an alarm sound saying, for example, "Pew, Pew, Fire". Meanwhile, the other sensing device(s) (an interconnection destination(s)) emits an alarm sound which enables the fire source to be located.

For example, when the sensing device 21 detects a fire, the sensing device 21 emits an alarm sound and gives, to the other sensing device(s) 20, notification of detection of the fire in the facility 5 (i.e., detection of the presence of a fire). When receiving the notification, the other sensing device(s) 20 emits an alarm sound. In addition, the sensing device 21 transmits the detection of the fire in the facility 5 (a detection result) to the sign determination system 1.

Note that one sensing device 20 (e.g., the sensing device 21) of the plurality of sensing devices 20 may be used as a master device, and the other sensing devices 20 (e.g., the sensing devices 22, 23, and 24) may be used as slave devices. When the sensing device 22, which is a slave device, detects a fire, the sensing device 22 emits an alarm sound and transmits, to the sensing device 21, which is the master device, information indicating that the fire is detected in the facility 5 (that is, the presence of a fire is detected) as the detection result. When receiving the detection result, the sensing device 21 emits an alarm sound and transmits an emission instruction to the other slave devices (the sensing devices 23 and 24). Further, the sensing device 21 transmits the detection result by the sensing device 22 to the sign determination system 1. The sensing devices 23 and 24, which have received the emission instruction from the sensing device 21, emit alarm sounds. When the sensing device 21 detects a fire, the sensing device 21 emits an alarm sound and transmits an emission instruction to the slave devices (the sensing devices 22 to 24). The sensing device 21 further transmits the detection result by the sensing device 21 to the sign determination system 1. The other sensing devices 20 (the sensing devices 22 to 24), which have received the emission instruction from the sensing device 21, emit alarm sounds.

### (2.1.2) Sign Determination System

The sign determination system 1 is embodied by a sign determination device 10 having a plurality of functions housed in one housing. The sign determination device 10 includes a first communicator 11, a second communicator 12, a storage 13, and a controller 14.

The first communicator 11 is configured to communicate with the plurality of sensing devices 20 over the internal network NT1 and via the relay 50. In the storage 13 of the sign determination device 10, the identifications ID of the plurality of sensing devices 20 arranged in the target space F2 are stored in advance. The first communicator 11 communicates with each sensing device 20 with reference to a corresponding one of the identifications ID stored in the storage 13.

The second communicator 12 is configured to communicate with a mobile communication terminal 40. In the present embodiment, the second communicator 12 and the mobile communication terminal 40 indirectly communicate with each other over an external network NT2. In the storage 13 of the sign determination device 10, an identification ID (such as a network address) of the mobile communication terminal 40 is stored in advance. The second communicator 12 indirectly communicates with the mobile communication terminal 40 with reference to the identification ID stored in the storage 13. The mobile communication terminal 40 is a portable communication terminal used by a user who uses the target space F2. The mobile communication terminal 40 is, for example, a smart phone, a tablet computer having a communication function, or a wearable device having a communication function. Note that in the case of the target space F2 being a retail establishment such as an eating and drinking establishment, examples of the user using the target space F2 may include workers and customers of the retail establishment.

The storage 13 is constituted by a device selected from Read Only Memory (ROM), Random Access Memory (RAM), Electrically Erasable Programmable Read Only Memory (EEPROM), and the like. The storage 13 stores the identifications ID of the plurality of sensing devices 20, the pieces of detection data D1 acquired from the plurality of sensing devices 20, the cumulative value D2 of the pieces of detection data D1, and the like.

The controller 14 may be embodied by, for example, a computer system including one or more processors (microprocessors) and one or more memory elements. That is, the one or more processors executes one or more programs stored in the one or more memory elements, thereby implementing functions as the controller 14. In this embodiment, the one or more programs are stored in the one or more memory elements of the controller 14 or the storage 13 in advance. However, the program(s) may be provided over a telecommunications network such as the Internet or as a non-transitory recording medium such as a memory card storing the program(s).

The controller 14 has functions as the detection data acquirer 141, the sign determiner 144, a fire determiner 145, and a notifier 146. Note that it is not essential that the controller 14 has the functions as the fire determiner 145 and the notifier 146, and the fire determiner 145 and the notifier 146 may be omitted as appropriate. In addition, when the controller 14 does not have the function as the fire determiner 145, the controller 14 may perform a notification process of notifying of the presence of a fire in accordance with the detection result received from the sensing device(s) 20.

The detection data acquirer 141 regularly transmits transmission requests of the pieces of detection data D1 to the plurality of sensing devices 20 via the first communicator 11. The detection data acquirer 141 acquires the pieces of detection data D1 transmitted from the respective sensing devices 20 in response to the transmission requests via the first communicator 11 and stores the pieces of detection data D1 thus acquired in the storage 13 in association with the identifications ID of respective transmission sources, that is, the corresponding sensing devices 20. That is, the storage 13 stores the detection data D1 from each of the plurality of sensing devices 20.

The sign determiner 144 obtains the cumulative value D2 by accumulating the pieces of detection data (e.g., pieces of detection data of the smoke sensors 202) D1 of the plurality of sensing devices 20 acquired by the detection data acquirer 141. Specifically, the sign determiner 144 accumulates the pieces of detection data D1 obtained by detection by respective sensors (e.g., the smoke sensors 202) included in the plurality of sensing devices 20 during the same detection period, thereby obtaining the cumulative value D2. In this embodiment, accumulating the pieces of detection data D1 detected during the same detection period means accumulating the pieces of detection data D1 which are obtained by detection by the sensors of the plurality of sensing devices 20 and which are detected during the detection period of an accumulation target. For example, when pieces of detection data D1 are acquired from the sensors of the four sensing devices 21 to 24, accumulating the pieces of detection data D1 detected during the same detection period means accumulating the pieces of detection data D1 obtained by detection by each of the sensor of the sensing device 21, the sensor of the sensing device 22, the sensor of the sensing device 23, and the sensor of the sensing device 24 during the detection period of the accumulation target. The cumulative value D2 is the sum of the pieces of detection data D1 (pieces of detection data D1 on the smoke density) obtained by detection by the respective sensors (e.g., smoke sensors 202) included in the plurality of sensing devices 20 during the same detection period, and the cumulative value D2 is a value obtained by adding up the pieces of detection data D1 of the plurality of sensors.

Note that the pieces of detection data D1 detected by the plurality of sensors in the same detection period are not limited to pieces of detection data D1 detected at the same time but may be pieces of detection data D1 detected within a predetermined period (e.g., during one period in which the detection data acquirer 141 transmits the transmission request). In a situation in which a sign is present before the outbreak of a fire, the amount of smoke generated in the target space F2 is small, and the amount of change in the detection data D1 of the smoke sensor 202 included in each of the sensing devices 20 is thus very small, and therefore, the sign of the fire is difficultly detected from the detection data D1 of each sensor. Therefore, the sign determiner 144 accumulates the pieces of detection data D1 of the respective sensors included in the plurality of sensing devices 20 to calculate the cumulative value D2 in which the amount of change at the occurrence of a sign of a fire is larger than in the detection data D1 of each sensor. Then, according to a non claimed embodiment,
the sign determiner 144 compares the cumulative value D2 of the pieces of detection data D1 and the prescribed sign threshold with each other in terms of their magnitudes, thereby determining the presence or absence of a sign of a fire. In other words, the sign determiner 144 determines the presence or absence of the sign in accordance with a result of the comparison of the cumulative value D2 with the sign threshold. If the cumulative value D2 of the pieces of detection data D1 is less than or equal to the sign threshold, the sign determiner 144 determines that a sign of a fire is absent, and if the cumulative value D2 of the pieces of detection data D1 is greater than the sign threshold, the sign determiner 144 determines that the sign of the fire is present. Note that this determination technique of determining the sign by the sign determiner 144 is merely an example and may accordingly be changed. According to a non claimed example, the sign determiner 144 may determine the presence or absence of the sign by comparing the cumulative value D2 obtained by accumulating the pieces of detection data D1 of the plurality of temperature sensors 201 included in the plurality of sensing devices 20 with the sign threshold in terms of their magnitude.

The fire determiner 145 determines the presence or absence of a fire in accordance with the piece of detection data D1 of the sensor (in accordance with a piece of detection data of the temperature sensor 201 and a piece of detection data D1 of the smoke sensor 202 in the present embodiment) of each of the plurality of sensing devices 20. That is, the sign determination system 1 (the sign determination device 10) also has a function of determining the presence or absence of a fire in accordance with the pieces of detection data D1 of any sensing device 20.

For example, the fire determiner 145 determines the presence or absence of a fire in the same manner as the sensing device 20. That is, the fire determiner 145 determines the presence or absence of a fire in accordance with a result of comparison of detection data related to the smoke density (detection data of the smoke sensor 202) D1 with the density threshold. The fire determiner 145 also refers detection data related to the temperature (detection data of the temperature sensor 201) to correct the detection data D1 related to the smoke density or the density threshold. In the present embodiment, the fire determiner 145 refers the detection data related to the temperature to correct the density threshold. The fire determiner 145 corrects the density threshold such that the density threshold decreases as the temperature increases, and thereby, sensitivity can be increased as the temperature increases. Note that the fire determiner 145 may correct the detection data D1 related to the smoke density such that a correction factor for multiplying the detection data D1 related to the smoke density increases as the detection data related to the temperature increases, and thereby, the sensitivity can be increased as the temperature increases.

The notifier 146 performs a notification process of notifying the mobile communication terminal 40 used by a user in the target space F2 of determination results by the sign determiner 144 and the fire determiner 145. The notifier 146 notifies the mobile communication terminal 40 of the determination results by the sign determiner 144 and the fire determiner 145 from the second communicator 12 over the external network NT2.

### (2.2) Description of Operation

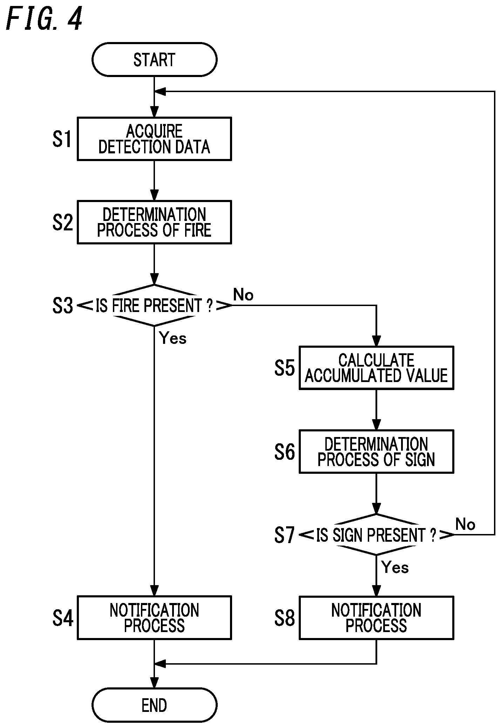

The operation of the sign determination system 1 (the sign determination device 10) of the present embodiment will be described with reference to FIG. 4 and other figures. Note that the flow chart shown in FIG. 4 is merely an example of the sign determination method according to the present embodiment, and the order of processes may be changed as appropriate, or a process(es) may be added or omitted as appropriate.

Each time a predetermined determination period (e.g., a period of several tens of seconds to several minutes) elapses, the detection data acquirer 141 of the sign determination device 10 transmits transmission requests requesting transmission of the pieces of detection data (pieces of detection data of the temperature sensors 201 and pieces of detection data D1 of the smoke sensors 202) to the plurality of sensing devices 20 via the first communicator 11. When the communicator 204 of each of the sensing devices 20 receives the transmission request from the sign determination device 10, the controller 205 causes the communicator 204 to transmit the detection data of the temperature sensor 201 and the detection data D1 of the smoke sensor 202 to the sign determination device 10. When the detection data acquirer 141 acquires the pieces of detection data transmitted from each of the sensing devices 20 in response to the transmission request via the first communicator 11, the detection data acquirer 141 stores the pieces of detection data thus acquired in the storage 13 in association with the identification ID of the corresponding sensing device 20 which is the transmission source of the pieces of detection data (S1).

When the detection data acquirer 141 receives the pieces of detection data obtained by detection during the same detection period from all of the sensing devices 20 arranged in the target space F2, the fire determiner 145 determines the presence or absence of a fire in accordance with the pieces of detection data (the detection data of the temperature sensor 201 and the detection data D1 of the smoke sensor 202) of each of the sensing devices 20 (S2). The fire determiner 145 uses the detection data of the temperature sensor 201 obtained from each of the sensing device 20 to set the density threshold L1 (see FIG. 3) regarding the smoke density. The fire determiner 145 then determines the presence or absence of a fire by comparing the detection data D1 on the smoke density acquired from the individual sensing device 20 with the density threshold L1 in terms of their magnitude.

If it is determined that the fire is present in the fire determination process S2 (S3: Yes), the notifier 146 performs a notification process of causing the second communicator 12 to transmit, to the mobile communication terminal 40, notification information for notifying of the presence of the fire (S4). As a result, the user of the mobile communication terminal 40 is able to grasp the presence of the fire in the target space F2.

In addition, if it is determined that the fire is absent in the fire determination process S2 (S3: No), the sign determiner 144 accumulates the pieces of detection data D1 on the smoke density, for example, from the smoke sensors 202 to calculate the cumulative value D2 (S5).

In the calculation process (S5) of the cumulative value D2, the sign determiner 144 may obtain the cumulative value D2 by accumulating one or more pieces of detection data D1, except for an outlier(s), of the pieces of detection data D1 of the respective sensors of the plurality of sensing devices 20. The outlier is detection data D1 which is one of the pieces of detection data D1 obtained by detection by the plurality of sensors and whose value is significantly deviates from values of the remaining pieces of detection data D1. For example, the sign determiner 144 obtains a representative value (such as a median value or an average value) of the pieces of detection data D1 obtained by detection by the plurality of sensors, and the sign determiner 144 then determines that a detection data D1 which differs from the representative value by a value greater than a predetermined error tolerance value is the outlier. Then, the sign determiner 144 accumulates one or more pieces of detection data obtained by removing the outlier(s) from the pieces of detection data D1 obtained by detection by the plurality of sensors, thereby obtaining the cumulative value D2. In this way, the cumulative value D2 can be obtained from which an abnormal value caused by noise or the like has been removed. To obtain the cumulative value D2, from which the outlier(s) has been removed, the sign determiner 144 preferably changes the sign threshold in accordance with the number of pieces of detection data D1 thus accumulated.

Then, according to a non claimed embodiment the sign determiner 144 compares the cumulative value D2 of the smoke density with a sign threshold L2 (see FIG. 3) in terms of their magnitudes, thereby determining the presence or absence of a sign of a fire (S6). If the cumulative value D2 of the smoke density is less than or equal to the sign threshold L2, the sign determiner 144 determines that a sign of a fire is absent, and if the cumulative value D2 of the smoke density is greater than the sign threshold L2, the sign determiner 144 determines that the sign of the fire is present.

If it is determined that the sign is absent in the sign determination process S6 (S7: No), the operation returns to the process S1, and the processes described above are then repeated.

If it is determined that the sign is present in the sign determination process S6 (S7: Yes), the notifier 146 performs a notification process of causing the second communicator 12 to transmit notification information notifying of the presence of the sign to the mobile communication terminal 40 (S8). As a result, the user of the mobile communication terminal 40 can recognize the presence of a sign of a fire in the target space F2 and can detect the fire at an earlier stage. For example, in the example shown in FIG. 3, the cumulative value D2 exceeds the sign threshold L2 before a timing t3 at which the detection data D1 exceeds the density threshold L1. Thus, the sign determination system 1 can detect a sign of a fire before the fire determiner 145 and any of the sensing devices 20 sense the presence of the fire. This therefore shortens the time from a timing t1 at which the sign of the fire occurs to a timing at which the mobile communication terminal 40 used by the user is notified of the notification information, so that the user can respond to the fire at an earlier timing.

In the calculation process S5 of the cumulative value D2, according to the invention, the sign determiner 144 adds the sum of pieces of detection data (e.g., pieces of detection data of the smoke sensors 202) D1 acquired from the plurality of sensing devices 20 to a previous cumulative value (a time cumulative value) to obtain a time cumulative value. That is, according to the invention the sign determiner 144 determines the presence or absence of the sign in accordance with a time integral value obtained by time integration of the cumulative value D2. Determining the presence or absence of the sign in accordance with the time cumulative value can absorb a temporary variation in the detection data D1 due to the effect of noise and the like and can reduce erroneous determination of the presence or absence of the sign.

### (3)Variations

The embodiment described above may be readily modified in various manners depending on a design choice or any other factor without departing from the scope of the present disclosure. In addition, the same functions as those of the sign determination system 1 may be implemented by a sign determination method, a computer program, a non-transitory recording medium in which a program is recorded, or the like. A sign determination method of an aspect includes a detection data acquiring process and a sign determination process. A plurality of sensing devices 20 are arranged in a target space F2. The plurality of sensing devices 20 each sense the presence or absence of a fire in the target space F2 in accordance with a piece of detection data of a sensor configured to detect a fire-related event related to at least one of a temperature or a smoke density. The detection data acquiring process includes acquiring a plurality of the pieces of detection data from the plurality of sensing devices 20. The sign determination process includes determining the presence or absence of a sign of the fire in the target space F2 in accordance with a time integral value obtained by time integration of a cumulative value obtained by accumulating the pieces of detection data acquired from each of the plurality of sensing devices 20. A (computer) program according to an aspect is a program for causing one or more processors to execute the detection data acquiring process and the sign determination process.

Next, variations of the embodiment described above will be enumerated one after another. The variations described below are applicable accordingly in combination.

The sign determination system 1 and the integrated system 2 include computer systems. The computer systems include processors and memory elements as hardware as main components. The processors execute programs recorded in the memory elements of the computer systems, thereby realizing the functions as the sign determination system 1 and integrated system 2. The program may be stored in the memory of the computer system in advance, may be provided via a telecommunications network, or may be provided as a non-transitory recording medium such as a computer system-readable memory card, optical disc, or hard disk drive storing the program. The processor of the computer system may be made up of a single or a plurality of electronic circuits including a semiconductor integrated circuit (IC) or a largescale integrated circuit (LSI).The integrated circuit such as IC or LSI mentioned herein may be referred to in another way, depending on the degree of the integration and includes integrated circuits called system LSI, very-large-scale integration (VLSI), or ultra-large-scale integration (ULSI).Further, a Field-Programmable Gate Array (FPGA), which is programmable after fabrication of the LSI, or a logical device which allows reconfiguration of connections in LSI or reconfiguration of circuit cells in LSI may be adopted as the processor. The plurality of electronic circuits may be collected on one chip or may be distributed on a plurality of chips. The plurality of chips may be collected in one device or may be distributed in a plurality of devices. As mentioned herein, the computer system includes a microcontroller including one or more processors and one or more memories. Thus, the microcontroller is also composed of one or more electronic circuits including a semiconductor integrated circuit or a large-scale integrated circuit.

In addition, it is not an essential configuration for the sign determination system 1 and the integrated system 2 that the plurality of functions of the sign determination system 1 and the integrated system 2 are integrated in one housing, and the components of the sign determination system 1 and the integrated system 2 may be distributed in a plurality of housings. Furthermore, at least some of the functions of the sign determination system 1 and the integrated system 2, for example, some of the functions of the sign determination system 1 and the integrated system 2 may be implemented by cloud (cloud computing) or the like.

In the embodiment described above, the sign determiner 144 accumulates pieces of detection data of the temperature sensors 201 to determine the cumulative value D2 and determines the presence or absence of a sign of a fire in accordance with a time integral value obtained by time integration of the cumulative value D2. Alternatively, according to non claimed alternatives,
the sign determiner 144 may accumulate pieces of detection data on a fire-related event other than the pieces of detection data of the temperature sensors 201 and the pieces of detection data of the smoke sensors 202 to determine the cumulative value D2 and may determine the presence or absence of a sign of a fire in accordance with the cumulative value D2.

In the embodiment described above, the target space F2 is the space of one retail establishment 70 in the facility F1, but the target space F2 may be spaces in of a plurality of retail establishments 70 or a space of a shared part of the facility F1.

In the embodiment described above, the facility F1 is the commercial complex, but the facility F1 is not limited to the commercial complex. The facility F1 may be a residential building such as a detached house or a multiple dwelling unit or may be a non-residential building. The non-residential building may be, for example, an office building, a theater, a movie theater, a public hall, a recreation hall, a eating and drinking establishment, a department store, a school, a hotel, an inn, a hospital, a nursing home, a kindergarten, a library, a museum, an art museum, an underground mall, a station, an airport, or the like.

In the embodiment described above, the sign determination system 1 notifies the mobile communication terminal 40 used by the user of the determination results by the sign determiner 144 and the fire determiner 145, but a security personnel in the facility F1, a private security company, or a public disaster prevention organization such as or a fire department may be notified of the determination results.

In the embodiment described above, the sign determination system 1 may transmit the determination results by the sign determiner 144 and the fire determiner 145 to a management system that manages equipment (e.g., an illumination system) of the facility F1. The management system, for example, turns on the illumination system of the facility F1 in accordance with the determination results by the sign determiner 144 and the fire determiner 145, thereby facilitating evacuation from the facility F1.

### (3.1) First Variations

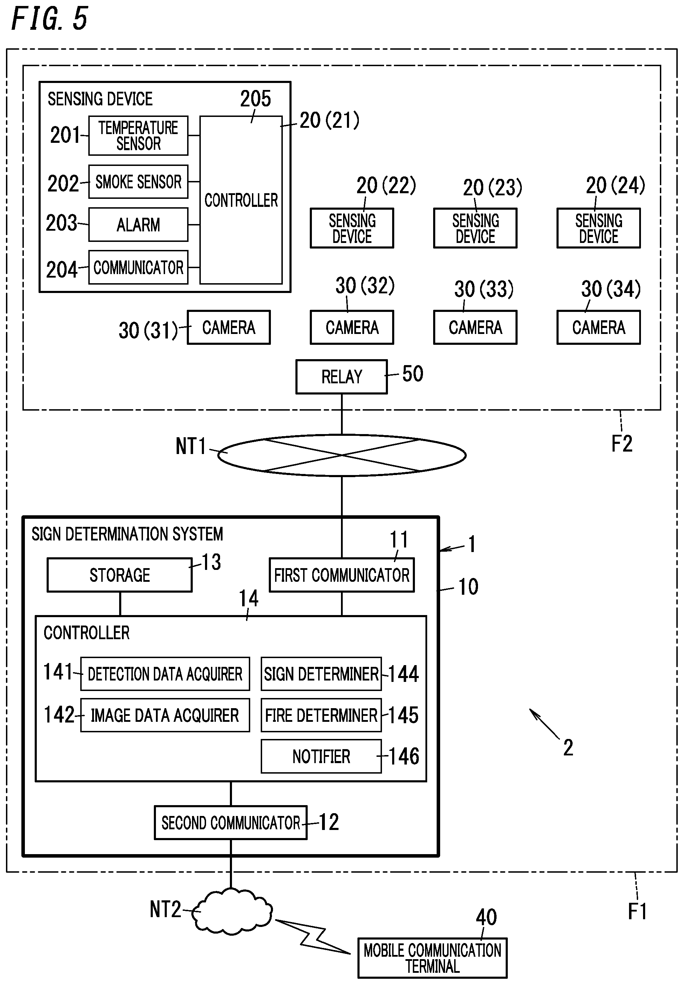

A sign determination system 1 and an integrated system 2 of a first variation will be described with reference to FIG. 5. The sign determination system 1 of the first variation is different from the that of the embodiment described above in that the sign determination system 1 of this variation further includes an image data acquirer 142 configured to acquire image data from a camera 30 (image capturing unit) configured to capture an image of at least part of a target space F2, wherein a sign determiner 144 also determines the presence or absence of a sign in accordance with a cumulative value D2 and the image data. Components common to those in the embodiment described above are denoted by the same reference signs, and the description thereof will be omitted.

In the target space F2, a plurality of cameras 30 are arranged to correspond to a plurality of sensing devices 20 on a one-to-one basis. In the embodiment described above, the four sensing devices 21 to 24 are arranged in the target space F2, and the plurality of cameras 30 include four cameras 31 to 34 respectively arranged to correspond to the four sensing devices 21 to 24.

Each of the plurality of cameras 30 has an image capturing area which is a detection area in which the presence or absence of a fire is to be detected by the corresponding one of the plurality of sensing devices 20, and each of the plurality of cameras 30 regularly captures an image of the image capturing area. The plurality of cameras 30 are configured to communicate with the sign determination system 1. For example, when receiving a transmission request of image data from the sign determination system 1, the plurality of cameras 30 transmit pieces of image data obtained by capturing images of the image capturing area to the sign determination system 1.

The image data acquirer 142 collects the pieces of image data from the plurality of cameras 30 at a timing at which a detection data acquirer 141 collects pieces of detection data from a plurality of sensing devices 20. Then, the sign determiner 144 determines the presence or absence of the sign in accordance with a time integral value obtained by time integration of the cumulative value D2 and the pieces of image data In this case, determining the presence or absence of the sign further in accordance with the pieces of image data enables erroneous detection of the sign to be reduced.

In this variation, the sign determiner 144 performs a primary determination of the presence or absence of the sign in accordance with a time integral value obtained by time integration of the cumulative value D2, and if the sign determiner 144 determines that the sign is present in the primary determination, the sign determiner 144 then performs a secondary determination of the presence or absence of the sign in accordance with the pieces of image data. In the process of determining the presence or absence of the sign in accordance with the pieces of image data (secondary determination), the amount of processing by the controller 14 is larger than in the process of determining the presence or absence of the sign in accordance with a time integral value obtained by time integration of the cumulative value D2 (primary determination). However, the secondary determination is performed only when it is determined that the sign is present in the primary determination, and therefore, the processing load of the controller 14 can be reduced. The sign determiner 144 compares image data of a reference image when a sign of a fire is present with the image data from one of the cameras 30 to determine the presence or absence of the sign, but the determination technique of determining the presence or absence of the sign may accordingly be changed. For example, the sign determiner 144 may determine the presence or absence of the sign in the target space F2 by inputting the image data of the camera 30 to a learned model generated as teacher data by using the image data when a sign of a fire is present.

### (3.2) Second Variation

A second ,non claimed variation is different from the embodiment described above in that a sign determiner 144 is configured to change a sign threshold used to determine the presence or absence of a sign. In other words, in the second variation, the sign determiner 144 determines the presence or absence of the sign in accordance with a result of comparison of a cumulative value D2 of pieces of detection data with the sign threshold, wherein the sign threshold is changeable. For example, the sign determiner 144 reduces the sign threshold such that the sensitivity is higher in an absence situation in which a user is absent in a target space F2 than in a presence situation in which the user is present in the target space F2, and therefore, a sign of a fire is detectable with a higher sensitivity in the absence situation.

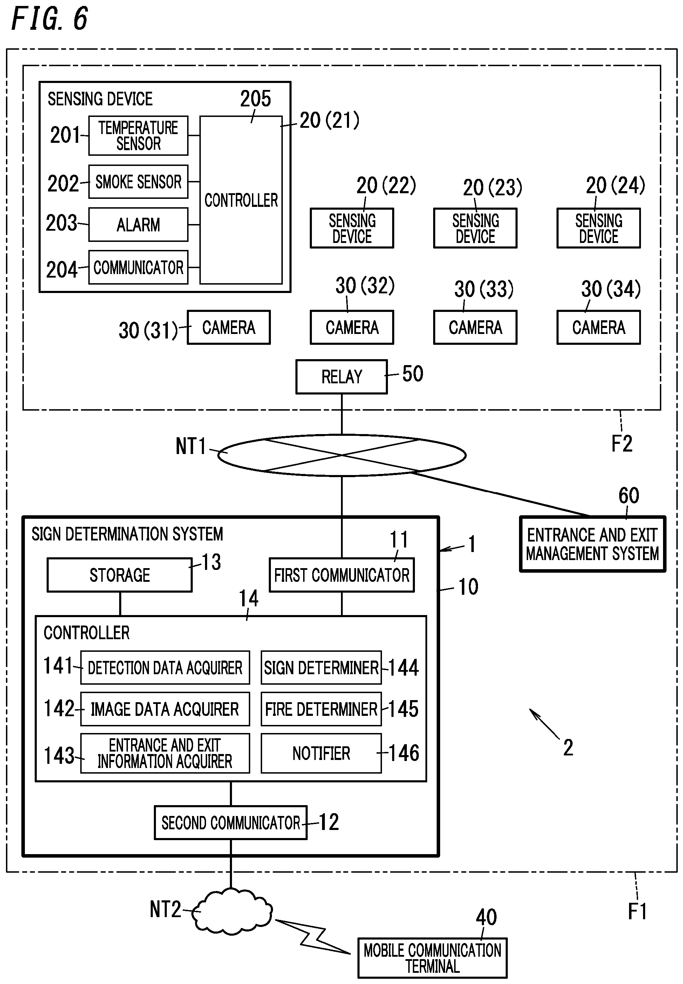

A specific example of a sign determination system 1 and an integrated system 2 of the second variation will be described with reference to FIG. 6. The sign determination system 1 of the second variation further includes an entrance and exit information acquirer 143 configured to acquire entrance and exit information related to entrance and exit of a user from an entrance and exit management system 60 configured to manage entrance and exit of the user into and from the target space F2. Then, the sign determiner 144 changes the sign thresholds in accordance with the entrance and exit information. Note that configurations other than entrance and exit management system 60 and the entrance and exit information acquirer 143 are the same as those of the first variations, and therefore, the same components as those of the embodiment and the first variation described above are denoted by the same reference signs, and the description thereof is omitted.

The entrance and exit management system 60 includes card readers installed at an entrance and an exit of the target space F2. Further, the entrance and exit management system 60 is configured to communicate with the sign determination system 1 (sign determination device 10). In entrance and exit management system 60, management-target user(s) (i.e., a store clerk(s) of a retail establishment 70) of users who enter and exit the target space F2 is provided with an ID card in advance. When the user enters the target space F2 or when the user exits the target space F2, the user holds the ID card over the card reader, and the card reader reads ID information stored in the ID card. The entrance and exit management system 60 manages the entrance and exit of the user into and from the target space F2 in accordance with the ID information read from the ID card by the card reader. When receiving a transmission request from the sign determination system 1, the entrance and exit management system 60 transmits, to the sign determination system 1, the entrance and exit information related to the entrance and exit of the user.

The entrance and exit information acquirer 143 of the sign determination system 1 transmits, to the entrance and exit management system 60, a request signal requesting transmission of the entrance and exit information at a timing at which a detection data acquirer 141 collects the pieces of detection data from the plurality of sensing devices 20. When receiving the request signal from the sign determination system 1, the entrance and exit management system 60 transmits the entrance and exit information to the sign determination system 1. At this time, the sign determiner 144 changes the sign threshold in accordance with the entrance and exit information. For example, in the absence situation in which the user is absent in the target space F2, the sign determiner 144 reduces the sign threshold as compared to the presence situation in which the user is present in the target space F2. As a result, the sign determiner 144 can detect the presence of the sign with a higher sensitively in the absence state than in the presence state and can easily detect a sign of a fire in the absence state.

In this variation, if the sign determiner 144 determines that a sign of a fire is present, a notifier 146 notifies a mobile communication terminal 40 used by a user who is a management target by the entrance and exit management system 60 of a determination result by the sign determiner 144. As a result, the user who is the management target whose entrance and exit into and from the target space F2 are managed can be notified of the determination result by the sign determiner 144. Note that the notifier 146 may notify the mobile communication terminal 40 used by the user, who is the management target, of a determination result by the fire determiner 145, and in this case, the user can grasp the presence of a fire in the target space F2.

If the sign determiner 144 determines that a sign of a fire is present, the notifier 146 may notify, in accordance with the entrance and exit information, only the mobile communication terminal 40 used by the user in the target space F2 of the determination result by the sign determiner 144. Notifying the user in the target space F2 of the sign of the fire allows the user to take actions such as taking measures to prevent the spread of the fire or evacuating from the target space F2.

In addition, when detecting a sign of a fire, the sign determination system 1 may output an emission instruction to the plurality of sensing devices 20 to cause the plurality of sensing devices 20 to perform an emission operation, thereby giving an alarm about the sign of the fire to the users.

### Reference Signs List

- 1: Sign Determination System
- 2: Integrated System
- 20: Sensing Device
- 30: Camera (Image Capturing Unit)
- 40: Mobile Communication Terminal
- 60: Entrance and Exit Management System
- 141: Detection Data Acquirer
- 142: Image Data Acquirer
- 143: Entrance and Exit Information Acquirer
- 144: Sign Determiner
- 145: Fire Determiner
- 146: Notifier
- 201: Temperature Sensor (Sensor)
- 202: Smoke Sensor (Sensor)
- D1: Detection Data
- D2: Cumulative value
- F2: Target Space

## Claims

1. A system including a sign determination system (1) and a plurality of sensing devices (20),
the plurality of sensing devices (20) each including a sensor (201, 202) and each configured to sense a presence or absence of a fire in a target space (F2) in accordance with a piece of detection data (D1) of the sensor (201,202) configured to detect a fire-related event related to at least one of a temperature or a smoke density in the target space (F2), wherein each of the plurality of sesing devices (20) includes a temperature sensor (201) and a smoke sensor (202),
the sign determination system (1) comprising:
a detection data acquirer (141) configured to acquire, from each of the plurality of sensing devices (20) a plurality of the pieces of detection data (D1);
**characterized by**
a sign determiner (144) configured to determine a presence or absence of a sign of the fire in the target space (F2) in accordance with a time integral value obtained by time integration of a cumulative value (D2) obtained by accumulating the pieces of detection data (D1) acquired from each of the plurality of sensing devices (20),
wherein the cumulative value (D2) is a sum of the pieces of detection data (D1) obtained by detection by the respective sensors (201,202) included in each of the plurality of sensing devices (20) during a same detection period, and the cumulative value (D2) is a value obtained by adding up the pieces of detection data (D1) of each of the plurality of sensors (201,202).

2. The system of claim 1, wherein the sign determination system (1) further comprises a fire determiner (145) configured to determine the presence or absence of the fire in accordance with the piece of detection data (D1) of the sensor (201,202) included in each of the plurality of sensing devices (20).

3. The system of claim 2, wherein
the fire determiner (145) is configured to determine the presence or absence of the fire in accordance with a result of comparison of the piece of detection data (D1), which is related to the smoke density, with a density threshold, and
the fire determiner (145) is configured to use a piece of detection data (D1) related to the temperature to correct the piece of detection data (D1) related to the smoke density or the density threshold.

4. The system of any one of claims 1 to 3, wherein
the sign determiner (144) is configured to accumulate one or more pieces of detection data (D1) obtained by removing an outlier from the pieces of detection data (D1) of the sensors (201, 202) included in the plurality of sensing devices to obtain the cumulative value (D2).

5. The system of any one of claims 1 to 4, wherein the sign determination system further comprises an image data acquirer (142) configured to acquire image data from an image capturing unit (30) configured to capture an image of at least part of the target space (F2), wherein
the sign determiner (144) is configured to also determine the presence or absence of the sign in accordance with the cumulative value (D2) and the image data.

6. A sign determination method comprising:
sensing by each of a plurality of sensing devices (20) a presence or absence of a fire in a target space (F2) in accordance with a piece of detection data (D1) of a sensor (201,202) configured to detect a fire-related event related to at least one of a temperature or a smoke density in the target space (F2), wherein each of the plurality of sesing devices (20) includes a temperature sensor (201) and a smoke sensor (202),
a detection data acquiring process of acquiring, from each of the plurality of sensing devices (20) a plurality of the pieces of detection data (D1); and
a sign determination process of determining a presence or absence of a sign of the fire in the target space (F2) in accordance with a time integral value obtained by time integration of a cumulative value (D2) obtained by accumulating the pieces of detection data (D1) acquired from each of the plurality of sensing devices (20),
wherein the cumulative value (D2) is a sum of the pieces of detection data (D1) obtained by detection by the respective sensors (201,202) included in each of the plurality of sensing devices (20) during a same detection period, and the cumulative value (D2) is a value obtained by adding up the pieces of detection data (D1) of each of the plurality of sensors (201,202).

7. A program configured to cause the system according to claim 1 to execute the sign determination method of claim 6.

## Patentansprüche

1. System, aufweisend ein Zeichenbestimmungssystem (1) und eine Mehrzahl von Erfassungsvorrichtungen (20),
wobei die Mehrzahl von Erfassungsvorrichtungen (20) jeweils einen Sensor (201, 202) aufweist und jeweils so konfiguriert ist, dass sie ein Vorliegen oder Nichtvorliegen eines Brandes in einem Zielraum (F2) in Übereinstimmung mit einem Detektionsdatenelement (D1) des Sensors (201, 202) erfasst, der so konfiguriert ist, dass er ein brandbezogenes Ereignis detektiert, das auf mindestens eines von einer Temperatur oder einer Rauchdichte in einem Zielraum (F2) bezogen ist, wobei jede der Mehrzahl von Erfassungsvorrichtungen (20) einen Temperatursensor (201) und einen Rauchsensor (202) aufweist,
wobei das Zeichenbestimmungssystem (1) aufweist:
eine Detektionsdatenerlangungseinrichtung (141), die so konfiguriert ist, dass sie von jeder der Mehrzahl von Erfassungsvorrichtungen (20) eine Mehrzahl von Detektionsdatenelementen (D1) erlangt;
**gekennzeichnet durch**
eine Zeichenbestimmungseinrichtung (144), die so konfiguriert ist, dass sie das Vorliegen oder Nichtvorliegen eines Zeichens für einen Brand in dem Zielraum (F2) in Übereinstimmung mit einem Zeitintegralwert bestimmt, der durch zeitliche Integration eines kumulierten Wertes (D2) erhalten wird, der durch Akkumulieren der von jeder der Mehrzahl von Erfassungsvorrichtungen (20) gewonnenen Detektionsdatenelemente (D1) erhalten wird.
wobei der kumulierte Wert (D2) eine Summe der Detektionsdatenelemente (D1) ist, die durch Detektion durch die in jeder der Mehrzahl von Erfassungsvorrichtungen (20) enthaltenen jeweiligen Sensoren (201, 202) während desselben Detektionszeitraums erhalten wurden, und der kumulierte Wert (D2) ein Wert ist, der durch Aufaddieren der Detektionsdatenelemente (D1) jeder der Mehrzahl von Sensoren (201, 202) erhalten wurde.

2. System nach Anspruch 1, wobei das Zeichenbestimmungssystem (1) ferner eine Brandbestimmungseinrichtung (145) aufweist, die so konfiguriert ist, dass sie das Vorliegen oder Nichtvorliegen des Brandes in Übereinstimmung mit dem Detektionsdatenelement (D1) der in jeder der Mehrzahl von Erfassungsvorrichtungen (20) enthalten Sensoren (201, 202) bestimmt.

3. System nach Anspruch 2, wobei
die Brandbestimmungseinrichtung (145) so konfiguriert ist, dass sie das Vorliegen oder Nichtvorliegen des Brandes in Übereinstimmung mit einem Ergebnis eines Vergleichs des auf die Rauchdichte bezogenen Detektionsdatenelements (D1) mit einem Dichteschwellenwert bestimmt, und
die Brandbestimmungseinrichtung (145) so konfiguriert ist, dass sie ein auf die Temperatur bezogenes Detektionsdatenelement (D1) verwendet, um das auf die Rauchdichte bezogene Detektionsdatenelement (D1) oder den Dichteschwellenwert zu korrigieren.

4. System nach einem der Ansprüche 1 bis 3, wobei die Zeichenbestimmungseinrichtung (144) so konfiguriert ist, dass sie ein oder mehrere Detektionsdatenelemente (D1), die durch Entfernen eines Ausreißers aus den Detektionsdatenelementen (D1) der in der Mehrzahl von Erfassungsvorrichtungen enthaltenen Sensoren (201, 202) erhalten werden, akkumuliert, um den kumulierten Wert (D2) zu erhalten.

5. System nach einem der Ansprüche 1 bis 4, wobei das Zeichenbestimmungssystem ferner eine Bilddatenerlangungseinrichtung (142) aufweist, die so konfiguriert ist, dass sie Bilddaten von einer Bildaufnahmeeinheit (30) erlangt, die so konfiguriert ist, dass sie ein Bild von mindestens einem Teil des Zielraums (F2) aufnimmt, wobei
die Zeichenbestimmungseinrichtung (144) so konfiguriert ist, dass sie das Vorliegen oder Nichtvorliegen des Zeichens auch in Übereinstimmung mit dem kumulierten Wert (D2) und den Bilddaten bestimmt.

6. Zeichenbestimmungsverfahren, umfassend:
Erfassen des Vorliegens oder Nichtvorliegens eines Brandes in einem Zielraum (F2) durch jede einer Mehrzahl von Erfassungsvorrichtungen (20) in Übereinstimmung mit einem Detektionsdatenelement (D1) eines Sensors (201, 202), der so konfiguriert ist, dass er ein brandbezogenes Ereignis detektiert, das auf mindestens eines von einer Temperatur oder einer Rauchdichte in dem Zielraum (F2) bezogen ist, wobei jede der Mehrzahl von Erfassungsvorrichtungen (20) einen Temperatursensor (201) und einen Rauchsensor (202) aufweist,
einen Detektionsdatenerlangungsprozess zum Gewinnen einer Mehrzahl von Detektionsdatenelementen (D1) von jeder der Mehrzahl von Erfassungsvorrichtungen (20); und
ein Zeichenbestimmungsprozess zum Bestimmen des Vorliegens oder Nichtvorliegens eines Zeichens für einen Brand in dem Zielraum (F2) in Übereinstimmung mit einem Zeitintegralwert, der durch zeitliche Integration eines kumulierten Wertes (D2) erhalten wird, der durch Akkumulieren der von jeder der Mehrzahl von Erfassungsvorrichtungen (20) gewonnenen Detektionsdatenelemente (D1) erhalten wird,
wobei der kumulierte Wert (D2) eine Summe der Detektionsdatenelemente (D1) ist, die durch Detektion durch die in jeder der Mehrzahl von Erfassungsvorrichtungen (20) enthaltenen jeweiligen Sensoren (201, 202) während desselben Detektionszeitraums erhalten werden, und der kumulierte Wert (D2) ein Wert ist, der durch Aufaddieren der Detektionsdatenelemente (D1) jedes der Mehrzahl von Sensoren (201, 202) erhalten wird.

7. Programm, das so konfiguriert ist, dass es das System nach Anspruch 1 veranlasst, das Zeichenbestimmungsverfahren nach Anspruch 6 auszuführen.

## Revendications

1. Système comportant un système de détermination de signe (1) et une pluralité de dispositifs de détection (20),
la pluralité de dispositifs de détection (20) comportant chacun un capteur (201, 202) et étant chacun configurés pour détecter une présence ou une absence d'un incendie dans un espace cible (F2) en fonction d'un élément de données de détection (D1) du capteur (201, 202), configuré pour détecter un événement relatif à un incendie qui est relatif à une température et/ou à une densité de fumée dans l'espace cible (F2), chacun de la pluralité de dispositifs de détection (20) comportant un capteur de température (201) et un capteur de fumée (202),
le système de détermination de signe (1) comprenant :
une unité d'acquisition de données de détection (141) configurée pour acquérir, auprès de chacun de la pluralité de dispositifs de détection (20), une pluralité des éléments de données de détection (D1) ;
**caractérisé par**
une unité de détermination de signe (144) configurée pour déterminer une présence ou une absence d'un signe de l'incendie dans l'espace cible (F2) en fonction d'une valeur d'intégrale temporelle obtenue par intégration temporelle d'une valeur cumulée (D2) obtenue par cumul des éléments de données de détection (D1) acquis auprès de chacun de la pluralité de dispositifs capteurs (20),
dans lequel la valeur cumulée (D2) est une somme des éléments de données de détection (D1) obtenus par détection par les capteurs (201, 202) respectifs compris dans chacun de la pluralité de dispositifs de détection (20) pendant une même période de détection, et la valeur cumulée (D2) est une valeur obtenue par addition des éléments de données de détection (D1) de chacun de la pluralité de capteurs (201, 202).

2. Système selon la revendication 1, dans lequel le système de détermination de signe (1) comprend en outre une unité de détermination d'incendie (145) configurée pour déterminer la présence ou l'absence de l'incendie en fonction de l'élément de données de détection (D1) du capteur (201, 202) compris dans chacun de la pluralité de dispositifs de détection (20).

3. Système selon la revendication 2, dans lequel
l'unité de détermination d'incendie (145) est configurée pour déterminer la présence ou l'absence de l'incendie en fonction d'un résultat de comparaison de l'élément de données de détection (D1), qui est relatif à la densité de fumée, avec un seuil de densité, et
l'unité de détermination d'incendie (145) est configurée pour utiliser un élément de données de détection (D1) relatif à la température afin de corriger l'élément de données de détection (D1) relatif à la densité de fumée ou le seuil de densité.

4. Système selon l'une quelconque des revendications 1 à 3, dans lequel
l'unité de détermination de signe (144) est configurée pour cumuler un ou plusieurs éléments de données de détection (D1) obtenus par élimination d'une valeur aberrante des éléments de données de détection (D1) des capteurs (201, 202) compris dans la pluralité de dispositifs de détection, afin d'obtenir la valeur cumulée (D2).

5. Système selon l'une quelconque des revendications 1 à 4, dans lequel le système de détermination de signe comprend en outre une unité d'acquisition de données d'image (142) configurée pour acquérir des données d'image auprès d'une unité de capture d'image (30) configurée pour capturer une image d'au moins une partie de l'espace cible (F2), dans lequel
l'unité de détermination de signe (144) est configurée pour déterminer également la présence ou l'absence du signe en fonction de la valeur cumulée (D2) et des données d'image.

6. Procédé de détermination de signe, comprenant :
la détection, par chacun d'une pluralité de dispositifs de détection (20), d'une présence ou d'une absence d'un incendie dans un espace cible (F2) en fonction d'un élément de données de détection (D1) d'un capteur (201, 202), configuré pour détecter un événement relatif à un incendie qui est relatif à une température et/ou à une densité de fumée dans l'espace cible (F2), chacun de la pluralité de dispositifs de détection (20) comportant un capteur de température (201) et un capteur de fumée (202),
un processus d'acquisition de données de détection consistant en l'acquisition, auprès de chacun de la pluralité de dispositifs de détection (20), d'une pluralité des éléments de données de détection (D1) ; et
un processus de détermination de signe consistant en la détermination d'une présence ou d'une absence d'un signe de l'incendie dans l'espace cible (F2) en fonction d'une valeur d'intégrale temporelle obtenue par intégration temporelle d'une valeur cumulée (D2) obtenue par cumul des éléments de données de détection (D1) acquis auprès de chacun de la pluralité de dispositifs de détection (20),
dans lequel la valeur cumulée (D2) est une somme des éléments de données de détection (D1) obtenus par détection par les capteurs (201, 202) respectifs compris dans chacun de la pluralité de dispositifs de détection (20) pendant une même période de détection, et la valeur cumulée (D2) est une valeur obtenue par addition des éléments de données de détection (D1) de chacun de la pluralité de capteurs (201, 202).

7. Programme configuré pour amener le système selon la revendication 1 à exécuter le procédé de détermination de signe selon la revendication 6.
